# EUROPEAN PATENT SPECIFICATION

(11) **EP 0 482 167 B1**
(45) Date of publication and mention of the grant of the patent: **08.11.1995**
(21) Application number: 91909211.4
(22) Date of filing: 10.05.1991
(51) Int. Cl.: H04Q 9/00

(54) **ADDRESSING DEVICE**
ADRESSIERANORDNUNG
DISPOSITIF D'ADRESSAGE

(30) Priority: 10.05.1990 CH 1596/90
(43) Date of publication of application: 29.04.1992
(73) Proprietor: VOCKENHUBER, Peter, CH-1427 Bonvillars (CH)
(72) Inventor: VOCKENHUBER, Peter, CH-1427 Bonvillars (CH)
(74) Representative: Kügele, Bernhard
(86) International application number: EP9100883
(87) International publication number: WO9117633

(56) References cited:
- EP-A- 0 071 367
- WO-A-90/01245

## Description

The invention relates to an addressing device as described in the preamble of claim 1.

The PCT Patent application WO-A-9 001 245 proposes an addressing device that relies on the cable impedance to address a sequence of addressable units, which is accomplished without using any specially coded addresses, where all addressable units are of the same kind, and where the addressing is performed by a standardized signal.

This proposal constitues a remakable progress compared to the prior state of the art, where addressing is performed by specially coded individual addresses at the site of the addressable units.

Nevertheless, the proposed arrangement PCT Patent application WO-A-9 001 245 has the disadvantage that high frequencies have to be used in order to address the unit, as the cable impedance is too low to sufficiently change the parameter of the standardized signal.

On the one side, high frequencies imply a high power consumption of the used electronic components, they make them more expensive to produce, and on the other side, they imply high radio emissions of the used frequencies. This may make it necessary to shield the complete cable, proposed in PCT Patent application WO-A-9 001 245, in order to be compatible with the local radio emission prescriptions, which may considerably raise production costs.

One more disadvantage of the arrangement proposed in PCT Patent application WO-A-9 001 245 is the possibility to collectively address two nearby cells by the standardized signal, which is only insufficiently weakened between them. One may prevent that failure by using a higher addressing frequency, but this goes at the expense of the previously mentioned problems concerning the emitted power, the component cost and their power consumption.

Finally, one further disadvantage of an arrangement following the proposal in PCT Patent application WO-A-9 001 245 is, that the impedance member, intended to weaken the standardized signal, has to be realized in the form of a capacitor, which is an electronic component that cannot be integrated on a chip.

It is the objective of the present invention to overcome the above mentioned disadvantages. This is accomplished as set forth in claim 1.

The invention is based on the insight that it is important for the addressing arrangement, to dispose of an impedance member that is of low value compared to the longitudinal cable impedance. The only way to accomplish this, while using conventional electronic devices, is an active impedance member. This impedance member is realized in the form of the output impedance of a voltage reference at the site of all cells. As they are electronically regulated voltage sources, that do not appreciably change under the load of varying currents, they have very low impedance values, which renders the addressing of the cells possible, even if the wire impedance of the address wire is comparatively low.

Claim 2 proposes measures intended to realize such an addressing arrangement using real components. Voltage references have certain tolerances originating from their fabrication process and their operating conditions, for example at different temperatures, that may only be reduced at a certain cost.

The electronic regulation of the output value of an addressable unit, that is connected to the address wire, which follows the voltage reference input, which may be either locally generated, or transmitted through the reference wire, is done with an error term, the so-called offset voltage, which is in general strongly temperature-dependent, and which adds to, or substracts from the voltage to be regulated.

In applying the means set forth in claim 3 it is guaranteed, that the voltage drop across the cable impedance of the reference wire between two succeeding addressable units has the effect, that the following addressable unit produces a voltage at its addressing output, that is lower by this voltage drop. Following this reasoning, the voltage drop across the cable impedance must be higher than the offset voltage of the voltage reference of the concerned addressable unit in the worst case.

The measures set forth in claim 4 guarantee that this voltage drop between two succeeding addressable units has always the same value, and is independent of the distance between the control unit and the addressable unit.

Even if the correct choice of the respective impedances has been made as set forth in claim 4, the drop of the reference voltage between two succeeding addressable units may vary slightly. This will specially occur in cases where a great number of addressable units are attached to a long cable, and the sum of the longitudinal impedances of the reference wire provoke a voltage difference across the reference wire that cannot be neglected, and the voltage drop between two neighbouring cells may decrease. The measures set forth in claim 5 compensate this effect.

The measures set forth in claim 6 provide that more than only one information source or information sink per addressable unit may be addressed.

The measures set forth in claims 7 and 8 limit the valid range of the addressing signal current in order to suppress electromagnetic interference signals.

The measures set forth in claim 9 provide that the address wire and the information wire may be combined in cases where information output is concerned.

The measures set forth in claim 10 propose a simple realization of the switches that are necessary for the addressing to take place.

Claim 11 describes an addressable unit for the addressing arrangement.

Claim 12 describes a simple control unit for the addressing arrangement.

Further details of the invention will be explained following the execution examples of the drawings. They show:
Fig. 1 an overwiev of an arrangement as proposed by the invention,
Fig. 2 a preferred execution example of a cell, that works without a reference wire and where four different input or output operations may be performed by the addressable unit,
Fig. 3 a preferred execution example of a cell with measures intended to supress electromagnetic interference signals,
Fig. 4 an example of an addressable unit using electronic circuitry.

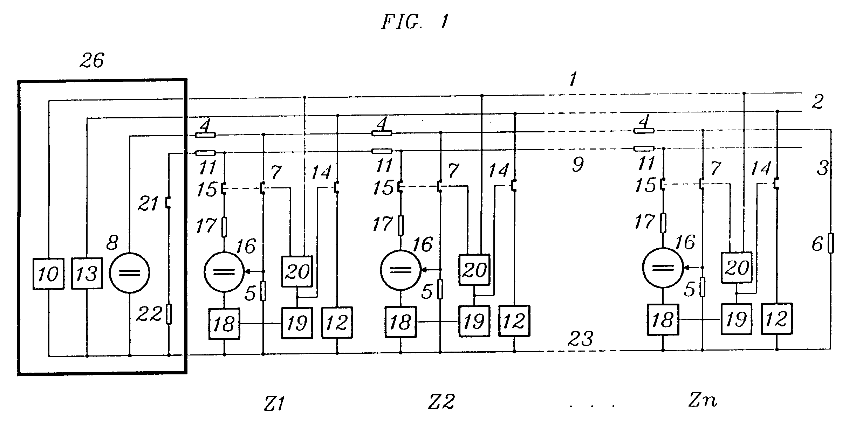

Fig. 1 shows a typical execution example of an arrangement, that is proposed by the invention. As shown, the arrangement comprises 5 wires mutually connecting the addressable units 28 Z1, Z2 to Zn to the control unit 26. One of them is the supply wire 1 which is connected to a supply unit 10 that provides appropriate voltage between the supply inputs and the ground wire 23 for all cells. The information wire 2 connects all the local information sources or information sinks 12 via the information switch 14 to a centralized information input/ output unit 13, that determines the direction and kind of information flow.

The addressing is performed as follows: As soon as the addressing switch 21 of the control unit 26 is closed, a corresponding current will be drawn through the address wire 9 and the limiting resistor 22. As the output impedance 17 of the voltage reference 16 of the first addressable unit is considerably lower than the longitudinal impedance 11 of the address wire that is located between the first addressable unit Z1 next to the control unit and its successor Z2, this current will be drawn out of the voltage reference 16 of this first adressable unit Z1. The relation between the output impedances 17 of the voltage references 16 and the longitudinal impedance of the address wire makes sure, that only the first cell Z1 will be addressed and not the second.

Of course, the longitudinal impedances 4 and 11 of the respective address and reference wires are not necessarily electronic components. One will prefer to use a cable, the wire impedance of which corresponds to this impedance values. For such a cable one has to interprete the impedances 4 and 11 of all figures as equivalent values for the longitudinal impedance of the cosidered wire.

The same is valid for the symbols, standing for the output impedance 17 of the reference voltages 16 of the figures, which are not real impedances. The symbol stands for the equivalent value of their output impedance, and it is drawn for clarity purposes in the context of the addressing principle.

At the site of the addressed cell Z1, the addressing current is measured by the current detector 18, which may be a resistor, and the corresponding signal is fed to a threshold detector 19.

Preferentially, this threshold detector 19 will be a schmitt - trigger with hysteresis.

As soon as a predetermined upper threshold is overridden it changes state, closes the information switch 14, and connects the information source or -sink 12 with the information input and/or output device 13.

Now information, in whatever direction, may be transmitted. As soon as the transmission is terminated, the addressing switch 21 opens, no more curent flows through the address wire and the current detector 18, and the threshold detector 19 resets, opening the information switch 14 and the flip flop 20 changes state.

This flip flop disconnects the cell Z1 from the address wire 9 by opening the switch 15 and from the reference wire 3 by opening the switch 7. The cell will remain in this state until the supply voltage will be shut down, and eventually brought up again, which will reset the flip flop to its starting position, where the address switch 15 and the reference switch 7 are closed, and the information switch 14 is open.

This addressing cycle for a cell is repeated, and the next cell Z2 is addressed, as the first one is disconnected. This second cell Z2 will finally disconnect from the wires 2, 3, and 9 when its addressing cycle is over, and the addressing cycle will repeat until the last cell Zn of the cable is addressed. Eventually the whole system is reset to its starting position by shutting down the supply voltage and bringing it up again.

The reset member, necessary to accomplish this, has not been drawn in the figure.

It is evident, that the reset function may be accomplished by a dedicated reset wire, or by a special state of the reference wire.

The voltage present at the input of the controllable voltage reference 16 is the result of the longitudinal impedance 4 of the reference wire, the transversal reference impedance 5, and of its terminating impedance 6. By proper choice of this terminating impedance 6, one may obtain a total impedance, composed of all longitudinal and transversal impedances of the arrangement, that is constant and does not depend on the site of the addressed unit.

This proper choice of the values of the terminating impedance 6 and of the transversal impedances 5 of the reference wire, as mentioned above, which is a well-known technique, guarantee, that the current, that drains through the reference wire towards the not yet addressed rest of the cable, is constant, provided that all addressable units that have already been addressed, did open the reference switch 7. This implies that the voltage difference between two reference inputs of succeeding addressable units is always of the same value and does not depend on the address of the addressable unit.

One may use this voltage difference in order to compensate for tolerances, imprecisions and temperature dependencies of the reference voltages 16 of the individual addressable units, that one has to account for in real cases.

As this voltage difference is only a function of the current that flows through the reference wire and of its longitudinal impedance 4, it may be of almost any value. If one supposes that the cable properties and the properties of the addressable unit are determined, this voltage difference is only a function of the cable terminating impedance. By proper choice, a compromise between the power consumption and the production cost, or the cost to adjust the pecision of the addressable units of an arrangement as set forth by the invention, is achievable.

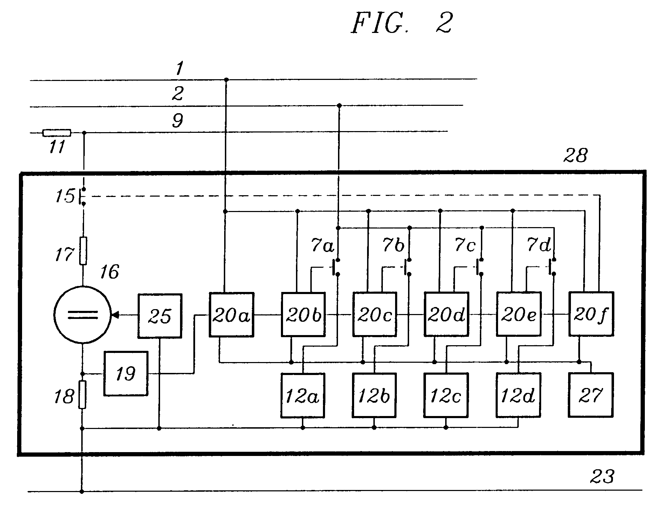

Fig. 2 shows an addressable unit 28 attached to the information wire 2, the address wire 9 and to the supply- and the ground wires 1 and 23. This is a variant of the invention using four wires and no reference wire.

As already mentioned, this may be accomplished by either using a very precise reference voltage 25, by chosing a sufficiently high value for the longitudinal impedance 11 of the address wire, or by chosing a very low value for the output impedance 17 of the local reference voltages 16 or by any combination of this measures.

The local reference voltage 25 is present in every addressable unit and its value controls the voltage reference 16. The precision of this local reference voltage must be sufficiently high, so that no intolerable values of voltage differences at the output of the addressable units create a current through the address wire, which, in turn, may be detected by the current detector 18 of a neighbouring cell.

It is left to a cost trade-off to decide wether it is advantageous to realize such a precise local voltage reference 25 at the site of all addressable units (Fig. 2), or to transmit a common reference voltage to all addressable units by a special reference wire (Fig. 1).

The example in Fig. 2 illustrates the control of more than one information source or -sink 12 at the site of the addressable unit 28. This may be specially advantageous if one desires to send and receive information, the location of which is the same. As an example one could consider the measurement of the local temperature and the control of extinction valves for fire protection at the same site by a single addressable unit.

The addressing of the information sources or information sinks 12a .. 12d of fig. 2 is accomplished in a sequential manner. At the moment when the power supply comes up, a reset member 27 generates a defined state of the shift register, that is composed of the cells 20a to 20f. This state is characterized by all cells 20b to 20f being set to logical zero, and the cell 20a to logical one.

The shift register cells control the information switches 7a to 7d of the respective information sources or information sinks 12a to 12d. If their output is logical one, the switches 7a to 7d are closed, otherwise they are open.

The shift register cell 20f is connected to the address switch 15 of the cell 28, and an output of logical zero closes, one of logical one opens the switch.

At every instant where the threshold detector 19 changes state, the contents of the shift register, composed of the cells 20a to 20f are shifted right by one place. At the first detection of the threshold detector the switch 7a is closed, and information is transmitted, at the second detection the switch 7b is closed, and so forth until the last information switch 7d is closed.

At the instant of the next detection of the threshold detector the shift register 20a to 20f will shift its contents once more to the right by one place, and this will open all switches of the addressable unit, including the address switch 15.

In consequence, the following addressing cycle will be received by the next addressable unit 28 that succeeds the one that has just been addressed.

An addressable unit in this state maintains the power supply only for the shift register, and all other power consuming circuitry is disconnected.

At the instant when the next reset and power up occurs, the reset member 27 will create the above mentioned inital state.

One may, of course continue the cascaded alignment of shift register cells 20a to 20f indefinitely in order to concentrate a great number of inputs and/or outputs at the site of the addressable unit.

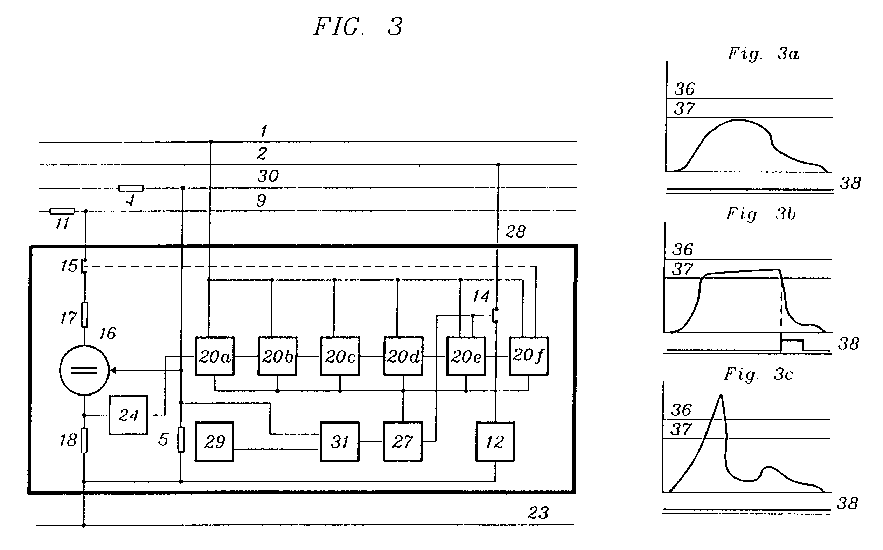

Figure 3 shows an addressable unit 28 of a five wire version of the present invention. This is a version comprising the supply wire 1, the ground wire 23, an address wire 9 and a combined reset- and reference wire 30, where this wire 30 transmits a common reference voltage, that is generated in the control unit 26, to all addressable units, in a similar manner as in fig. 1.

The impedances 4, 5, and 6 lower the reference voltage signal as already explained (Fig. 1).

The example in fig. 3 shows the supression of interference signals.

It is of great importance for real systems, that are exposed to electromagnetic interference, that the addressing technique, that is performed by the transmission of a current signal works satisfactorily. One has to guarantee, that currents, that are induced in the address wire will not inadvertently trigger the address of one or more cells.

Besides the usual measures for electrical interference supression, that are normally provided, as the shielding of the cable and/or the use of twisted wire pairs for sensible signals with their own ground wire, provision is made for two further measures, that are explained following the execution example of fig.3.

The first measure is the execution of the threshold detector 19 in the form of a window detector 24. It will issue an output signal if and only if the input voltage, that is taken from the current detector 18 has been found between a minimal and a maximal permissible value during a certain time.

This function is explained in the figures 3a, 3b and 3c, where three different input signal forms are drawn. The signal of fig. 3a shows an insufficient signal for the trespassing of the detector. The signal's amplitude is always below the minimal permissible value 37. The detector will, in contrast, issue an output signal in the case of the signal drawn in fig. 3b as soon as the input signal falls below the minimal permissible value 37, while the input signal form drawn in figure 3c will not yield a detection signal as the maximal permissible value has been trespassed.

This permits the elimination of less important interference signals, the amplitude of which falls below the minimal permissible value 37, and of more important interference signals that override the maximal permissible value 36, from the addressing current signal. At the site of the control unit, provision is made by the current limiting resistor 22 that the current, that flows in the state, where the addressing switch 21 is closed, corresponds approximately to the mean value between the minimal and the maximal permissible values 37 and 36.

No further explication is given for the electronic circuitry, that is necessary to realize the window detector, as it is composed of a combination of standard electronic components, using schmitt triggers, logic gates and flip - flops to obtain the wanted function. One may memorize the trespassing of the maximal permissible value 36 in a flip flop, the logic state of which is read at the negative going edge of the input signal through the threshold that is defined by the minimal permissible value 37. If at that moment the flip- flop is set, no output signal is issued. In the other case, the minimal permissible value 37 has been trespassed and not the maximal permissible value 36, and a one - shot will issue an output signal.

The second measure for interference supression comprises a shift register made of the cells 20a to 20f. This shift register is loaded by a reset member 27, where, as already mentioned, the first cell 20a is loaded with logical one, and all others with logical zero. The reset member will load the shift register if there is a corresponding signal at its input.

This input of the reset member is connected via an or gate 31 to the combined reference- and reset wire 30. If the reference voltage at its input falls below the threshold of the or gate 31, it will issue a corresponding signal to the reset member 27, and the shift register 20a to 20f will be set to its initial state.

The addressing cycle for the addressable unit 28 goes on as follows: Every time the window detector 24 issues a signal, the contents of the shift register are shifted right one place. After the fourth output signal of the window detector the cell 20e of the shift register changes state and the switch 14 is closed for information transmission. At the same time the cell 20e of the shift register issues an inhibit signal to the reset member 27 preventing it to abort an ongoing information transmission by a reset signal to the shift register.

The next following pulse issued by the window detector 24 will shift the contents of the shift register right by one place, and the switches 14 and 15 are opened.

If, by interference in the address wire, the window detector issues an output signal, the contents of the the shift register will be shifted right one place for every such event.

The timer 29, the output of which is connected to one of the inputs of the or gate 31 will regularily reset the shift register 20a to 20f by the reset member 27.

As a consequence, it is necessary, in order to successfully address the addressable unit 28, that at least four pulses are issued by the window detector 24 before the timer 29 resets the entire shift register.

Of course it is possible, to insert any number of shift register cells between the cell 20e, that starts the addressing action and the cell 20f that terminates it. This is not shown in fig. 3. The result would be, that one needs a certain number, say four pulses of the window detector 38, to terminate the addressing, and the addressing security will be higher while information is transmitted.

This technique will be specially advantageous if the information transmission takes a long time.

In this case, the reset member 27 will have to be modyfied so that it cannot issue a reset signal, that is caused by interference signals, while the information transmission is still ongoing.

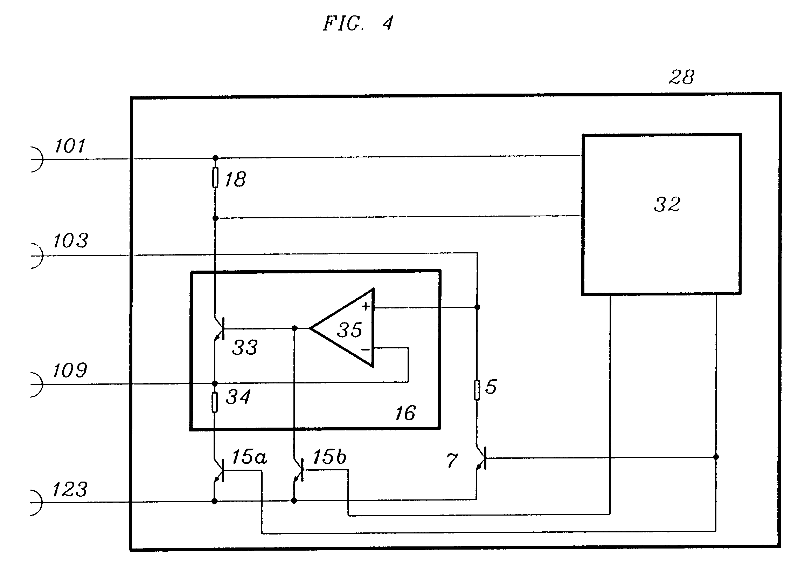

The example drawn in fig. 4 shows the electronic circuitry of the reference voltage 16 of an addressable unit 28 in detail. Only the input stage of the addressable unit and its interface to the supply wire 101, the reference wire 103, the address wire 109 and the ground wire 123 is shown, and the details of the rest 32 of the addressable unit are not drawn.

The reference voltage 16 comprises a transistor 33 and an operational amplyfier 35, that, together with a biasing resistor 34, are connected in such a manner, that the reference - output 109, attached to the address wire 9, is at the same voltage level as the reference input 103, attached to the reference wire 3. The reference input 103, that is attached to the reference wire 3 is connected to the transversal reference impedance 5.

The output voltage of the reference voltage 16 is regulated in a feedback-loop and it is independent of the output current that is drawn through the address wire. Consequently, the output impedance of the reference voltage 16 will be very low.

As current is drawn out of the reference voltage 16, the voltage at its output pin 109 will not change apreciably, but the voltage across the current detector, which is a resistor in the example, will change in proportion to the current in the address wire 9.

If the voltage across the current detector 18 becomes greater than a predetermined value, the other parts 32 of the addressable unit 28 will work as provided, and eventually, when the transmission is over, they will provide the signals to open the switches 15a, 15b and 7.

The switches are transistors in the example, that change to a state of high impedance between the collector and emitter pins, as the base voltage is lower than its threshold.

The switch 15 in the example of fig. 4 is doubled, and one part 15a of it disconnects the biasing resistor 34 from the ground wire, and the other part 15b closes the transistor 33 by shorting its base to the ground wire. The transistor 33 has two functions, namely once as voltage regulator, and, if its base is grounded by the secondary transistor 15b, as switching element.

The transistors 15a and 7 commute at base signals of zero volts, but the transistor 15b at a positive voltage, and the circuitry 32 in fig.4 has two complementary outputs that issue the same signal once with positive and once with inverted polarity to the respective transistors.

Of course it is possible, to invert the circuitry in the sense, that the addressing current flows into the addressable unit 28, where it is measured by a resistor that is connected to ground, and where this current signal is interpreted as an addressing signal.

In this case, all NPN - transistors have to be replaced by their PNP counterparts, and the circuit will work in an equivalent manner as in fig. 4, where all polarities and the current flow direction are inverted. Of course, in this case, the resistor 22 has to be tied to a positive voltage instead to ground.

Furthermore it is possible, and it will be the preferred choice in a heavily disturbed environment, to provide two address wires, one of them sourcing current to, and the other sinking current out of the addressable unit. In this case, the address detector is modyfied so that the two address currents have to be measured at the same time in order to validate the address. As, in general, interfering induced currents in the address wire have the same direction, this method constitutes a very efficient way to supress interference signals.

## Claims

1. Addressing arrangement comprising a cable with at least an address generator of a control unit (26) connected to a cable having at least an address wire (9), at least one information wire (2) and at least one supply wire (1), said cable interconnecting a multitude of addressable units (28) having attached detectors (18), where all addressing switches (15) of said addressable units are closed in their initial state and all information switches (14) of said addressable units are open in their initial state, where the information switch (14) of an addressed addressable unit (28) is closed, and the information switches of all other addressable units in the arrangement are open, where information is transmitted between a central information input/output means (13) at the site of the control unit and an information source or -sink (12) at the site of the addressed addressable unit, and where after transmission of the information of an addressable unit the address switch (15) and the information switch (14) are opened, and where an addressing signal is sent through the address wire in order to address the addressable unit (28) that is located next to the control unit (26), and that has not yet beeen addressed, *characterized in that*:
voltage references (16) of low ouput impedance (17) are connected to the address wire (9) by respective address switches (15), wherein
the said addressing signal is a current signal flowing through the address wire, wherein
this current signal originates from or flows into the addressable unit (28) that has not yet been addressed, and that is located next to the control unit (26), as the output impedance (17) of each voltage reference (16) is low compared to the longitudinal impedance (11) of the address wire, and wherein
this current signal is measured at the site of the addressable unit by a detector (18) and is interpretable as an addressing signal.

2. Addressing arrangement as set forth in claim 1, wherein the control unit (26) comprises a centralized reference voltage (8) of the arrangement, capable of producing said voltage references (16) and to transmit them by a reference wire (3) to all addressable units.

3. Addressing arrangement as set forth in claim 2, wherein the reference wire (3) has a longitudinal impedance (4), a transversal impedance (5) and a terminating impedance (6), whose proportion assures, that the total impedance of the reference wire from the addressed unit toward the terminating impedance has always the same value, and is independent of the location where the addressable unit is attached to the cable.

4. Addressing arrangement as set forth in claim 3, wherein the transversal impedances (5) of the reference wire (3) that belong to addressable units (28) that are already addressed, are disconnectable from the reference wire.

5. Addressing arrangement as set forth in one of the claims 2 to 4, wherein the reference voltage (8) of the control unit (26) is made in such a manner, that the reference voltage that is output to the reference wire (3) is regulated corresponding to the current drawn, and where the reference voltage drop between the addressed addressable unit (28) and the next addressable unit (28) is constant, and does not depend on the site of the addressable unit.

6. Addressing arrangement as set forth in one of the claims 1 to 5, characterized in that said addressing arrangement is designed such as to perform a plurality of addressing actions, whereas by a first addressing action a first information source or -sink (12a) is connectable to the central information input/output unit (13), that by a second addressing action a second information source or - sink (12b) is connectable to the central information input/output unit (13), and so forth, until after a last addressing action the addressing of the addressable units (28) is terminated.

7. Addressing arrangement as set forth in one of the claims 1 to 6, comprising a timer (29) for determining a time during which a certain number of detections need to occur in order to have the addressing current flowing through the address wire (9) interpreted as signal to start or terminate the addressing of the addressable units (28).

8. Addressing arrangement as set forth in one of the claims 1 to 7, wherein the detection of the addressing current takes place if and only if the value of the current is higher than a predetermined minimal value (37) and lower than a predetermined maximal value (36).

9. Addressing arrangement as set forth in one of the claims 1 to 8, wherein the addressing current comprises a fraction that determines the addressing of the addressable unit (28) and another fraction, the value of which is interpretable as information that is transmitted to the addressable unit by the control unit (26), combining the functions of the address wire and of the information wire in a common wire.

10. Addressing arrangement as set forth in one of the claims 1 to 9, wherein the reference voltage (16) and the address switch (15) are made out of one and the same transistor (33).

11. Addressable unit (28) in an arrangement as set forth in one of the claims 1 to 10, comprising
a reference voltage (16) of low output impedance (17) connectable to an address wire (9),
a current detector (18) and a threshold detector (19) for a signal issued by this current detector,
an address switch (15) and an information switch (14),
wherein said switches (14, 15) are controllable by a flip - flop (20), that is controlled by the threshold detector (19),
wherein the address switch (15) connects the reference voltage (16) to the address wire (9), and wherein
the information switch (14) connects an information wire (2) to an information sink or -source (12).

12. Control unit (26) in an addressing arrangement as set forth in one of the claims 1 to 10 comprising
a supply unit (10) providing an appropriate voltage supply between a supply wire (1) and a ground wire (23)
an information input and/or output unit (13) able to send or receive information through an information wire (2)
a current source or current sink (22), that is connected to an address wire (9) by a switching element (21), wherein
a specially adapted electronic circuit is adapted to establish the correspondence between the number of controlling pulses issued to the switching element (21) and the address of an addressable unit (28).

## Patentansprüche

1. Adressieranordnung mit einem Kabel mit zumindest einem Adressiergenerator einer Steuereinheit (26) die an ein Kabel angeschlossen ist, das zumindest einen Adressenleiter (9), zumindest einen Informationsleiter (2) und zumindest einen Versorgungsleiter (1) aufweist, das eine Vielzahl von Detektoren (18) aufweisende Schaltstellen (28) miteinander verbindet, die Adressendetektoren (18) angeschlossen haben, wobei alle Adressenschalter (15) der erwähnten Schaltstellen in ihrer Ausgangsstellung geschlossen sind, wobei der Informationsschalter (14) einer Schaltstelle (28) geschlossen, und die Informationsschlater aller anderen Schaltstellen der Anordnung offen sind, wobei Information zwischen einer zentralen Informationsein- und Ausgabeeinheit (13) und einer Informationsquelle oder - Senke (12) am Ort der adressierten Schaltstelle übertragen wird, und wobei nach erfolgter Informationsübertragung einer Schaltstelle der Adressenschalter (15) und der Informationsschalter (14) geöffnet werden und wobei ein Adressiersignal durch den Adressenleiter geschickt wird, um die Schaltstelle (28) zu adressieren, die der Steuereinheit (26) am nächsten liegt, dadurch gekennzeichnet,
dass Spannungsreferenzen (16) mit niedriger Ausgangsimpedanz (17) jeweils durch Adressenschalter (15) mit dem Adressenleiter (9) verbunden sind, wobei das erwähnte Adressiersignal ein Stromsignal ist, das durch den Adressenleiter fliesst, wobei dieser Strom aus der Schaltstelle (28), die noch nicht adressiert wurde, und die am nächsten zur Steuereinheit (26) gelegen ist, gezogen wird, oder in diese fliesst, da die Ausgangsimpedanz (17) jeder Spannungsreferenz (16) klein ist im Vergleich zur longitudinalen Kabelimpedanz (11) des Adressenleiters, und wobei dieses Stromsignal am Ort der Schaltstelle durch einen Detektor (18) gemessen wird, und als Adressiersignal interpretierbar ist.

2. Adressieranordnung nach Anspruch 1, wobei die Steuereinheit (26) eine zentrale Referenzspannungsquelle (8) der Anordnung enthält, die imstande ist, die erwähnte Spannungsreferenz (16) zu erzeugen, und diese durch den Referenzleiter (3) an alle Schaltstellen zu übertragen.

3. Adressieranordnung nach Anspruch 2, wobei der Referenzleiter (3) eine Längsimpedanz (4), eine Querimpedanz (5) und eine Abschlussimpedanz (6) aufweist, deren Verhältnis sicherstellt, dass die Gesamtimpedanz des Referenzleiters ab der adressierten Schaltstelle in Richtung Abschlussimpedanz immer den gleichen Wert aufweist, der unabhängig vom Ort ist, an dem sich die Schaltstelle am Kabel befindet.

4. Adressieranordnung nach Anspruch 3, wobei die Querimpedanzen (5) des Referenzleiters (3), die zur Schaltstelle (28) gehören, die schon adressiert wurde, vom Referenzleiter trennbar sind.

5. Adressieranordnung nach einem der Ansprüche 2 bis 4, wobei dass die Referenzspannungsquelle (8) der Ansteuereinheit (26) derart ausgebildet ist, dass die Referenzspannung, die an den Referenzleiter (3) abgegeben wird, dem Strom nachgeregelt wird, wodurch sich zwischen der adressierten Schaltstelle (28) und der nächsten, zu adressierenden Schaltstelle (28) eine Referenzspannungsdifferenz ergibt, deren Grösse nicht vom Ort der Schaltstelle abhängt.

6. Adressieranordnung nach einem der Ansprüche 1 bis 5, dadurch gekennzeichnet, dass die erwähnte Adressieranordnung so ausgelegt ist, dass diese eine Mehrzahl an Adressiervorgängen bewirken kann, wobei durch einen ersten Adressiervorgang eine erste Informationsquelle oder -Senke (12a) mit der zentralen Informationsein- und Ausgabeeinheit (13) verbindbar ist, durch einen zweiten Adressiervorgang eine zweite Informationsquelle oder -Senke (12b), und so fort, bis mit einem letzten Adressiervorgang die Adressierung der Schaltstelle (28) beendet wird.

7. Adressieranordnung nach einem der Ansprüche 1 bis 6, die ein Zeitglied (29) enthält, um die Zeit zu bestimmen, innerhalb der eine vorgegebene Anzahl von Adressierstromdetektionen erfolgen muss, damit der Adressierstrom, der durch den Adressenleiter (9) fliesst, als Signal interpretiert wird, das die Adressierung der Schaltstelle (28) einleitet oder beendet.

8. Adressieranordnung nach einem der Ansprüche 1 bis 7, wobei die Adressierstromdetektion dann und nur dann erfolgt, wenn die Stromstärke des Signals grösser als ein vorgegebener Minimalwert (37) und kleiner als ein vorgegebener Maximalwert (36) ist.

9. Adressieranordnung nach einem der Ansprüche 1 bis 8, wobei der Adressierstrom einen Anteil aufweist, der für die Adressierung der Schaltstelle (28) bestimmt ist, und der einen anderen Anteil aufweist, der als Information interpretierbar ist, die von der Steuereinheit (26) an die Schaltstellen übermittelt wird, wobei die Funktionen des Adressenleiters und des Informationsleiters durch einen gemeinsamen, kombinierten Leiter wahrgenommen werden.

10. Adressieranordnung nach einem der Ansprüche 1 bis 9 wobei die Spannungsreferenz (16) und der Adressenschalter (15) durch ein und denselben Transistor (33) gebildet werden.

11. Schaltstelle (28) in einer Adressieranordnung gemäss einem der Ansprüche 1 bis 10, bestehend aus
einer Spannungsreferez (16) mit niedriger Ausgangsimpedanz (17), die an einen Adressenleiter (9) anschliessbar ist,
einem Stromdetektor (18) und einem Schlwellwertschalter (19) zur Erzeugung eines Signals durch diesen Stromdetektor,
einen Adressenschalter (15) und einen Informationsschalter (14), wobei die erwähnten Schalter (14,15) von einem Flip-Flop (20) ansteuerbar sind, welches durch den Schwellwertschalter gesteuert wird,
wobei der Adressenschalter (15) die Referenzspannung (16) mit dem Adressenleiter (9) verbindet, und wobei
der Informationsschalter (14) den Informationsleiter (2) mit einer Informationsquelle oder -Senke (12) verbindet.

12. Steuereinheit (26) in einer Adresieranordnung gemäss einem der Ansprüche 1 bis 10 bestehend aus einer Versorgungseinheit (10), die eine geeignete Versorgungsspannung zwischen dem Versorgungsleiter (1) und einem Masseleiter (23) vorsieht,
einer Informations Ein- und -Ausgabeeinheit (13) die Information vom Informationsleiter (2) empfangen oder an diesen abgeben kann, eine Stromquelle oder -Senke (22), die durch ein Schaltelement (21) an einen Adressenleiter (9) angeschlossen ist,
wobei eine speziell dafür ausgelegte elektronische Schaltung die Zuordnung zwischen der Nummer des Steuerpulses, der an das Schaltelement (21) ausgegeben wird, und der Adresse der Schaltstelle (28) herstellt.

## Revendications

1. Dispositif d'adressage comprenant au moins un générateur d'adressage d'une unité de contrôle (26) reliée à un câble possédant au moins un conducteur d'adressage (9), un conducteur d'information (2) et au moins un conducteur d'alimentation (1), et ledit câble reliant une multitude d'unités adressables (28) munies de détecteurs (18) où tous les commutateurs d'adressage (15) desdites unités sont fermés dans leur état initial et où tous les commutateurs d'information (14) desdites unités adressables sont ouverts dans leur état initial, où le commutateur d'information (14) d'une unité adressable (28) est fermé et les commutateurs d'information de toutes les autres unités adressables du dispositif sont ouverts, où l'information est transmise à travers un dispositif central d'entrée/sortie d'information (13) à l'endroit de l'unité de contrôle et une source ou un consommateur d'information (12) à l'endroit de l'unité adressable adressée et où, après transmission de l'information d'une unité adressable, le commutateur d'adresssage (15) et le commutateur d'information (14) sont ouverts et où un signal d'adressage est envoyé le long du conducteur d'adressage pour adresser l'unité adressable (28) située à côté de l'unité de contrôle (26) et qui n'a pas encore été adressée, caractérisé en ce que:
des tensions de référence (16) de basse impédance de sortie (17) son reliées au conducteur d'adressage (9) par leurs commutateurs d'adressage (15) respectifs,où
ledit signal d'adressage est un signal de courant courant le long du conducteur d'adressage, où
ce signal de courant prend origine ou court vers l'unité adressable (28) laquelle n'a pas encore été adressée et qui est située à côté de l'unité de contrôle (26), l'impédance de sortie (17) de chaque tension de référence (16) étant basse par rapport à l'impédance longitudinale (11) du conducteur d'adressage, où
ce signal de courant est mesuré à l'endroit de l'unité adressable par un détecteur de courant (18) et est interprétable comme un signal d'adressage.

2. Dispositif d'adressage selon la revendication 1 caractérisé en ce que l'unité de contrôle (26) comprend une tension de référence centralisée (8) du dispositif, capable de produire lesdites tensions de référence (16) et de les transmettre à travers un conducteur de référence (3) à toutes les unités adressables.

3. Dispositif d'adressage selon la revendication 2, caractérisé en ce que le conducteur de référence (3) a une impédance longitudinale (4), une impédance transversale (5) et une impédance de terminaison (6) la proportion desquelles assure que l'impédance totale du conducteur de référence à partir de l'unité adressable vers l'impédance de terminaison a toujours la même valeur et est indépendante du lieu où l'unité adressable est connectée au câble.

4. Dispositif d'adressage selon la revendication 3, caractérisé en ce que l'impédance transversable (5) du conducteur de référence (3) appartenant aux unités adressables (28) qui ayant déjà été adressées, sont déconnectables du conducteur de référence.

5. Dispositif d'adressage selon l'une des revendications de 2 à 4, caractérisé en ce que la tension de référence (8) de l'unité de contrôle (26) est réalisée de telle sorte que la tension de référence émise sur le conducteur de référence (3) est régulée en proportion du courant tiré et en ce que la chute de tension entre l'unité adressable adressée (28) e la prochaine unité adressable (28) est constante et ne dépend pas du lieu de l'unité adressable.

6. Dispositif d'adressage selon l'une des revendications de 1 à 5, caractérisé en ce que ledit dispositif d'adressage est conçu de façon à exécuter une pluralité d'actions d'adressages, en ce qu'avec une première action d'adressage une première source ou un premier utilisateur d'information (12a) est connectable à l'unité centrale d'entrée/sortie d'information (13), en ce qu'avec une seconde action d'adressage une seconde source ou un second utilisateur d'information (12b) est connectable à l'unité centrale d'entrée/sortie d'information (13), et ainsi de suite jusqu'à ce que, après la dernière action d'adressage, l'adressage de l'unité adressable (28) soit achevé.

7. Dispositif d'adressage selon l'une des revendications de 1 à 6, caractérisé en ce qu'il comprend un temporisateur (29) pour déterminer un temps durant lequel doivent survenir un certain nombre de détections afin que le courant d'adressage coure le long du conducteur d'adressage (9) comme signal pour débuter ou achever l'adressage de l'unité adressable (28).

8. Dispositif d'adressage selon l'une des revendications de 1 à 7, caractérisé en ce que la détection du courant d'adressage n'a lieu que si et seulement si la valeur du courant est plus élevée qu'une valeur minimale prédéterminée (37) et inférieure à une valeur maximale prédéterminée (36).

9. Dispositif d'adressage selon l'une des revendications de 1 à 8, caractérisé en ce que le courant d'adressage comprend une fraction déterminant l'adressage de l'unité adressable (28) et une autre fraction, dont la valeur est interprétable comme information transmise à l'unité adressable par l'unité de contrôle (26), combinant les fonctions de conducteur d'adressage et de conducteur d'information en un conducteur commun.

10. Dispositif d'adressage selon l'une des revendications de 1 à 9, caractérisé en ce que la tension de référence (16) et le commutateur d'adressage (15) sont composés d'un seul et même transistor (33).

11. Unité adressable (28) dans un dispositif selon l'une des revendications de 1 à 10, caractérisée en ce qu'elle comprend
* une tension de référence (16) à basse impédance d'entrée (17) connectable à un conducteur d'adressage (9),
* un détecteur de courant (18) et un détecteur de seuil (19) pour un signal généré par ce détecteur de courant,
* un commutateur d'adressage (15) et un commutateur d'information (14), en ce que lesdits commutateurs (14, 15) sont contrôlables par un flip flop (20) contrôlé par un détecteur de seuil (19), en ce que le commutateur d'adressage (15) connecte la tension de référence (16) au conducteur d'adressage (9) et en ce que le commutateur d'adressage (14) connecte un conducteur d'information (2) à une source ou à un utilisateur d' information (12).

12. Unité de contrôle (26) dans un dispositif d'adressage selon l'une des revendications de 1 à 10, caractérisée en ce qu'elle comprend
* une unité d'alimentation (10) fournissant une tension d'alimentation appropriée entre un conducteur d'alimentation (17) et un conducteur de terre (23),
* une unité d'entrée/sortie d'information (13) capable d'envoyer ou de recevoir des informations à travers un conducteur d'adressage (2),
* une source de courant ou un consommateur de courant (22) connecté à un conducteur d'adressage (9) par un élément de commutation (21),
et où un circuit électronique spécialement adapté est prévu pour établir la correspondance entre le nombre d'impulsions de contrôle émises vers l'élément de commutation (21) et l'adresse d'une unité adressable (28).
